# EUROPÄISCHE PATENTSCHRIFT

(11) **EP 0 612 430 B1**
(45) Veröffentlichungstag und Bekanntmachung des Hinweises auf die Patenterteilung: **03.06.1998**
(21) Anmeldenummer: 93918990.8
(22) Anmeldetag: 11.09.1993
(51) Int. Cl.: G10K 11/00

(54) **ULTRASCHALLWANDLER**
ULTRASONIC TRANSDUCER
CAPTEUR A ULTRASONS

(30) Priorität: 15.09.1992 DE 4230773
(43) Veröffentlichungstag der Anmeldung: 31.08.1994
(73) Patentinhaber: Endress u. Hauser GmbH u.Co., D-79689 Maulburg (DE)
(72) Erfinder: MÜLLER, Roland, D-79585 Steinen (DE); KLÖFER, Peter, D-79585 Steinen (DE)
(86) Internationale Anmeldenummer: DE9300853
(87) Internationale Veröffentlichungsnummer: WO9407236

(56) Entgegenhaltungen:
- DE-A- 3 301 848
- DE-U- 9 217 071
- GB-A- 2 097 630
- PATENT ABSTRACTS OF JAPAN vol. 9, no. 126 (E-318)31. Mai 1985 & JP,60 012 899 (MATSUSHITA DENKI SANGYO KK) 23. Januar 1985

## Beschreibung

Die Erfindung bezieht sich auf einen Ultraschallwandler, welcher ein Gehäuse und einen zylindrischen Keramikschwinger geringer Dicke aufweist, an dessen Stirnseiten Metallelektroden angeordnet sind und an dessen einer, dem abzustrahlenden Medium zugewandten Stirnseite, eine Anpaßschicht aus Kunststoff angeordnet ist, welche in form- und wirkschlüssiger Verbindung zu der von dem Boden des Gehäuses gebildeten Membran steht und dessen restlicher Gehäuseinnenraum mit einer Dämpfungsschicht aus Kunststoff ausgefüllt ist.

Bedingt durch das physikalische Verhalten der als Sende- und Empfangswandler wirkenden Ultraschallwandler haben diese den Nachteil, daß die Messung der Wegstrecke zwischen der Membran und der Reflektionsebene nur bis zu einem Mindestabstand möglich ist. Dies bedeutet, daß ein Teil der Lagerkapazität eines Behälters oder eines Lagerplatzes oder das Fließvolumen eines Gerinnes zu einem Teil nicht ausgenutzt werden kann, weil eine Überwachung der Füll- oder Fließhöhe innerhalb des Mindestabstandes zwischen der Membran und der Reflektionsebene nicht möglich ist.

Bedingt wird dieser Mindestabstand dadurch, daß bei mit Schallimpulsen arbeitenden Wandlern die Schwingungen der Membran nach Ende des Sendeimpulses nicht sprunghaft aufhören, sondern die Membran noch eine kleine Zeitspanne nachschwingt. In der Zeit des Nachschwingens können jedoch keine ankommenden Echoimpulse empfangen oder zumindest nicht erkannt werden. Die Zeitspanne, in welcher ein Empfang oder die Auswertung des Echoimpulses nicht möglich ist, wird allgemein als Blockdistanz bezeichnet.

In der Deutschen Patentschrift 33 01 848 wird nun zur Verringerung der Blockdistanz vorgeschlagen, den gesamten Ultraschallwandler ohne die dem beschallenden Medium zugewandte Seite der Kunststoffanpaßschicht mit einer Schaumumhüllung aus einem Polyurethanschaum auszufüllen. Eine solche Schaumfüllung soll die Aufgabe lösen, das Ausschwingverhalten des Wandlers durch Dämpfung der mechanischen Schwingung zu beeinflussen und damit die Blockdistanz zu verkürzen. Dies geschieht dadurch, daß durch das Eindringen der Schallwelle in den Polyurethanschaum ein Teil der Schwingungsenergie verlorengeht und damit das Ausschwingverhalten des Keramikschwingers verkürzt wird. Die in der DE-PS 33 01 848 vorgeschlagene Lösung bringt aber den Nachteil, daß bedingt durch die unterschiedliche Dichte von Keramikwerkstoff und Polyurethanschaum nur ein sehr schlechter Übergang der akustischen Impedanz des Keramikschwingers zur Schaumstoffumhüllung gegeben ist. Vor allem besteht ein Nachteil darin, daß Polyurethanschaum nicht temperaturbeständig ist und deshalb eine ausnutzbare Reduzierung der Blockdistanz nur bei, in der Praxis sehr selten vorkommenden, idealen, gleichbleibenden Temperaturen erfolgen kann.

Nach dem weiteren Stand der Technik, wie auch in der DE-PS 33 01 848 beschrieben, besteht die, zwischen dem Keramikschwinger und der Membran angebrachte Kunststoffschicht zur Anpassung der akustischen Impedanz des keramischen Werkstoffes an die akustische Impedanz des Mediums, in welcher der Schallimpuls abgestrahlt werden soll, aus einem Polystyrollack mit eingebetteten Hohlkugeln aus Siliziumdioxyd. Aber auch Epoxidharze und, wie in Spalte 1, Zeile 36 der DE-PS 33 01 848 ausgeführt, Silikonelastomere, sind für diese Aufgabe bekannt geworden. Zum Beispiel stellt SELASTIC E der Firma DOW CORNING einen gern verwendeten Werkstoff dar.

Ein weiterer Nachteil der vorgeschlagenen Bedämpfung des Keramikschwingers mit einem Polyurethanschaum besteht nun darin, daß der Werkstoff der Anpaßschicht keine Verbindung mit dem Werkstoff der Bedämpfungsschicht eingehen kann und es insbesondere bei hohen Temperaturen sehr oft zur Ablösung beider Schichten kommt.

Deshalb sind in der Weiterentwicklung der, in der DE-PS 33 01 848 vorgeschlagenen Lehre, die Innengehäuse der gattungsgemäßen Ultraschallwandler ohne die, den beschallenden Medium zugewandte Seite der Anpaßschicht statt mit Polyurethanschaum häufig mit einem Silikonelastomer ausgefüllt. Solche Silikonelastomere, z. B. ECCOSIL 5952 der Firma GRACE Electronic Materials, bringen den Vorteil, daß die Bedämpfungsschicht eine chemisch ähnliche Basis wie die Anpaßschicht aufweist und dadurch eine bedeutend kleinere Differenz zwischen der akustischen Impedanz des Keramikschwingers und der akustischen Impedanz der Bedämpfungsschicht ein leichteres Eindringen und Absorbieren der Schallwellen ermöglicht, was zu einem kürzeren Ausschwingverhalten des Keramikschwingers führt. Ein weiterer Vorteil für die Verwendung dieser Werkstoffe als Bedämpfungsschicht ist in ihrer höheren Temperaturbeständigkeit zu sehen.

Aber auch diese Werkstoffe erfüllen nicht alle an sie gestellten Forderungen. Sie sind z. B., aufgrund des extrem hohen Mischverhältnisses (500 : 1) von Basismaterial und Härter nicht maschinenverarbeitbar. Daß heißt, sie müssen nach wie vor von Hand gemischt und aufgebracht werden. Die Kondensationsvernetzung bedingt, daß bei Aufbringen dicker Schichten in mehreren Schritten vorgegangen werden muß, um ein Entweichen der Spaltprodukte (Alkohole) zu ermöglichen. Weiter können die Spaltprodukte in die Anpaßschicht diffundieren, und dort zur Ausbildung von Haftungsschäden führen. Auch kann die Vernetzung bei hohen Temperaturen reversibel sein, d. h. bei hohen Temperaturen und gleichzeitigen Auftreten von Feuchte können nach längerer Liegezeit unerwünschte Zersetzungsprodukte frei werden.

Somit ist die gestellte Aufgabe durch die vorgeschlagenen Lösungen, und den allgemein angewandten Stand der Technik nur teilweise gelöst.

Demgegenüber stellt sich die Erfindung die Aufgabe, das Ausschwingverhalten eines Ultraschallwandlers durch die Aufbringung einer Bedämpfungsschicht so zu beeinflussen, daß eine noch kürzere Blockdistanz erreicht wird, und gleichzeitig die Bedämpfungsschicht maschinell gemischt und aufgebracht werden kann. Dabei soll die Bedämpfungsschicht mit der Anpaßschicht eine nicht lösbare Verbindung eingehen.

Gelöst wird diese Aufgabe durch das in dem Patentanspruch 1 gekennzeichneten Merkmal. Weitere Merkmale der Erfindung sind in den Unteransprüchen gekennzeichnet.

Weitere Vorteile der Erfindung bestehen darin, daß durch beim Vernetzen nicht Freiwerden von Spaltprodukten auch dickere Schichten in einem Arbeitsgang vergossen werden und auch bei hohen Temperaturen und gleichzeitiger Anwesenheit von Feuchte keine Reaktionsprodukte freigesetzt und reversible Reaktionen ausgelöst werden können. Eine kurze Topfzeit ermöglicht das schnelle Weiterbearbeiten der Bedämpfungsschicht nach dem Aufbringen.

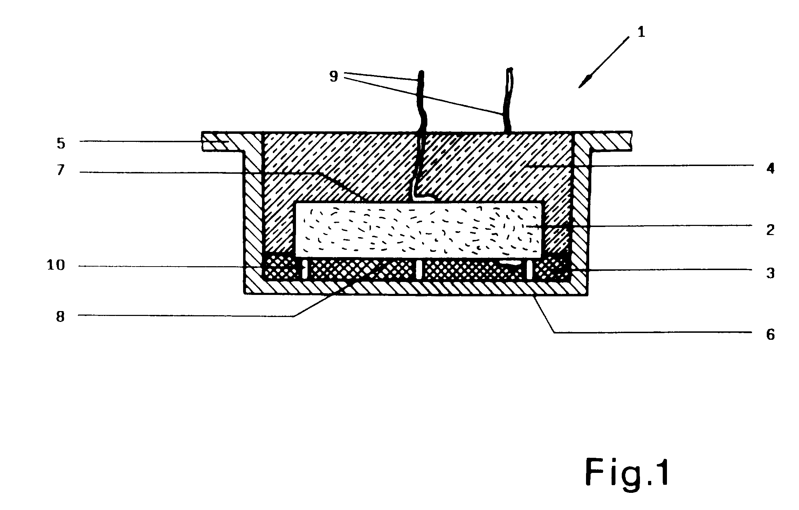

Die Erfindung soll anhand der einzigen Zeichnung näher beschrieben werden.

In der Figur ist mit 1 Ultraschallwandler dargestellt, welcher in bekannter Weise aus dem Keramikschwinger 2, der Anpaßschicht 3, der Bedämpfungsschicht 4, und dem, den Keramikschwinger 2, die Anpaßschicht 3 und die Bedämpfungsschicht 4 umschließenden Gehäuse 5 gebildet ist. Der Boden des Gehäuses 5 stellt gleichzeitig die Membran 6 des Ultraschallwandlers 1 dar. An dem Keramikschwinger 2 sind auf den beiden Stirnseiten Metallelektroden 7, 8 aufgebracht. Die mittels Lötverbindung an den Metallelektroden 7, 8 angeschlossenen Verbindungsleitungen 9, stehen in elektrischer Verbindung mit einer nicht dargestellten elektronischen Schaltung, durch welche der Keramikschwinger 2 zu Schwingungen mit der Frequenz der Ultraschallwelle angeregt wird. Wobei über die gleichen Leitungen 9 auch diejenige Wechselspannung zu der nicht dargestellten elektronischen Schaltung übertragen wird, welche der Keramikschwinger 2 bei Empfang der Echowelle abgibt.

Der Keramikschwinger 2 regt über die Anpaßschicht 3 die Membran 6 zu impulshaften Schwingungen an. Nach Ende des Sendeimpulses hören diese Schwingungen jedoch nicht sprunghaft auf, sondern der Keramikschwinger 2 schwingt noch eine kleine Zeitspanne nach. Es ist nun erkennbar, daß die, während dieser Nachschwingzeit an der Membran 6 ankommenden Echoimpulse, welche über die Anpaßschicht 3 den Keramikschwinger 2 zu Schwingungen anregen, nicht als Echoimpulse erkannt werden können. Es besteht deshalb das Bestreben, das Ausschwingverhalten des Keramikschwingers 2 so zu bedämpfen, daß bei Ende des Sendeimpulses ein möglichst schnelles Ausschwingen erfolgt und damit die Blockdistanz klein gehalten ist. Dies ist deshalb notwendig, damit auch kleine Abstände zwischen der Membran 6 und der Reflektionsebene dedektiert werden können.

Die Bedämpfung des Keramikschwingers 2 soll mit Hilfe einer Bedämpfungsschicht 4 geschehen, welche den Keramikschwinger 2 bis auf die, den Abstrahlmedien zugewandte Stirnfläche 8 umhüllt. Dabei kommt den Bedämpfungseigenschaften des Werkstoffes dieser Bedämpfungsschicht 4 eine bedeutende Rolle zu. Es hat sich überraschenderweise herausgestellt, daß ein additionsvernetzendes, 2-komponenten Silikonelastomer mit einem extrem hohen Feststoffgehalt, d. h. einer hohen spezifischen Dichte, z. B. > 2,00 g/cm³ die besten Dämpfungseigenschaften für den Keramikschwinger 2 aufweist.

In dem ausgeführten Beispiel der Erfindung ist die Bedämpfungsschicht 4 aus einem Silikonelastomer gebildet, welches einen 70 %igen Feststoffanteil aus Metalloxyden aufweist. Ein solches Silikonelastomer mit einem Anteil von 65 % Al₂O₃ und 5 % FE₂O₃ ist besonders gut geeignet dafür.

Das Aufbringen einer solchen Bedämpfungsschicht 4 mit extrem hohen Feststoffgehalt geschieht nun derart, daß zunächst der Innenraum des Gehäuses 5 sandgestrahlt und gereinigt wird. Das Sandstrahlen schafft eine rauhe Oberfläche von Boden und Innenwand des Gehäuses 5. Eine solche rauhe Oberfläche begünstigt die Haftung der Vergußschichten an dem Gehäuse. Nach anschließender Reinigung und dem Aufbringen einer Grundierschicht erfolgt deren Aktivierung bei erhöhter Temperatur. Ist das so vorbereitete Gehäuse 5 auf Raumtemperatur abgekühlt, kann der Keramikschwinger 2 eingesetzt werden. Dabei sind Maßnahmen vorgesehen, den Keramikschwinger 2 so in einem bestimmten Abstand von der Innenseite der Membran 6 zu halten, daß die, in den Zwischenraum zwischen Keramikschwinger 2 und Membran 6 eindringende Anpaßschicht 3 im ausgehärteten Zustand eine Dicke einnimmt, welche λ/4 der Ultraschallwelle entspricht. Erreicht wird dies dadurch, daß in dem Gehäuse 5 oder auch an dem Keramikschwinger 2 kurze Distanzstücke 10 aus Kunststoff angebracht sind, auf welchen sich der Keramikschwinger 2 abstützt. Das mittels einer Vergießmaschine maschinell gerührte und entlüftete 2-komponentige Silikonelastomer der Anpaßschicht 3 wird nun während des eigentlichen Gießvorganges maschinell zusammengeführt und in das Gehäuse 5 eingebracht. Das Einbringen der Schichten mittels einer Vergußmaschine bringt den Vorteil, daß wichtige Faktoren des Vergießvorganges, wie das Mischverhältnis, die einzubringende Masse usw. eingestellt und ständig überwacht werden können. Ein Vorteil, welcher gegenüber dem Handvergießen eine erhebliche Rationalisierung des Vorganges bedeutet. Nach Einbringen der Anpaßschicht 3 ist die, der Membran 6 zugewandte Stirnfläche 8 des Keramikschwingers 2, vollkommen von der Anpaßschicht 3 überdeckt und der Keramikschwinger 2 noch ein kurzes Stück in die Anpaßschicht 3 eingetaucht.

Bereits während des Vergießens der Anpaßschicht 3 kann die Aufbringung der Bedämpfungsschicht 4 vorbereitet werden. Da auch diese vorteilhaft aus einem maschinell verarbeitbaren 2-komponenten Silikonelastomer besteht, lassen sich auch die akustischen Kenngrößen des Vergusses exakt einstellen. So z. B. der Absorptionskoeffizient durch das kontrollierte Einbringen von exakt definierten Luftblasen und über die Dichte ebenfalls die Schallimpedanz. Ebenso sind die Viskosität und die Topfzeit so einstellbar, daß keine Luftblasen während des Vernetzungsvorganges aufsteigen können. Da die Anpaßschicht 3 eine chemisch ähnliche Basis wie die Bedämpfungsschicht 4 aufweist, läßt sich die Bedämpfungsschicht 4 bereits während der Gelierphase der Anpaßschicht 3 aufbringen. Wodurch eine besonders gute Haftung beider Schichten zueinander erzielt wird. Das Nichtfreiwerden von Spaltprodukten während der Vernetzungszeit läßt zu, daß die Bedämpfungsschicht 4 in einem einzigen Arbeitsgang aufgebracht werden kann. Der nach dem Aufbringen der Bedämpfungsschicht fertige Ultraschallwandler kann, bedingt durch die sehr kurze Topfzeit, des Werkstoffes der Bedämpfungsschicht 4 bereits nach kurzer Zeit der Weiterbearbeitung zugeführt werden.

Der weitere Vorteil der vorgeschlagenen Lösung besteht darin, daß die Bedämpfungsschicht 4 durch die hohen oxydischen Anteile eine akustische Impedanz aufweist, welche der akustischen Impedanz des Keramikwerkstoffes wesentlich näher kommt. Die, von der, der Bedämpfungsschicht 4 zugewandten, Stirnseite 7 des Keramikschwingers 2 ausgehende Schallwelle kann aufgrund dieser Ähnlichkeit leicht in die Bedämpfungsschicht 4 eindringen, um dort vollkommen absorbiert zu werden. Dies löst einen so kurzen Abfall der Schwingungsamplitude im Ausschwingverhalten des Keramikschwingers 2 aus, daß damit das Ausschwingverhalten wesentlich beeinflußt und eine kürzere Blockdistanz erreicht ist.

Der für die Bedämpfungsschicht 4 vorgeschlagene Werkstoff bietet außerdem den Vorteil, daß die Bedämpfungsschicht 4 eine so hohe Absorption aufweist, daß die Resonanzfrequenzen des Keramikschwingers 2 an der Stirnseite 7 und dem, von der Bedämpfungsschicht 4 umhüllten Teil der Mantelfläche des Keramikschwingers 2 völlig unterdrückt wird, was dazu führt, daß die Resonanzfrequenz nur in Richtung der Anpaßschicht 3 wirken kann.

## Patentansprüche

1. Ultraschallwandler (1) mit einem Gehäuse (5), einem zylindrischem Keramikschwinger (2) geringer Dicke, mit an den Stirnseiten des Keramikschwingers angeordneten Metallelektroden (7,8), einer an der dem abzustrahlenden Medium zugewandten Stirnseite des Keramikschwingers angeordneten Anpaßschicht (3) aus Kunststoff, welche in form- und wirkschlüssiger Verbindung zu der von dem Boden des Gehäuses gebildeten Membran (6) des Ultraschallschwingers steht, dessen restlicher Innenraum von einer Bedämpfungsschicht (4) aus Kunststoff ausgefüllt ist, **dadurch gekennzeichnet**, daß die Bedämpfungsschicht (4) aus einem Silikonelastomer mit einem hohen Anteil aus Metalloxyden gebildet ist.

2. Ultraschallwandler nach Anspruch 1, **dadurch gekennzeichnet**, daß die Bedämpfungsschicht 4 eine spezifische Dichte > 2,00 g/ cm³ aufweist.

3. Ultraschallwandler nach Anspruch 1, **dadurch gekennzeichnet**, daß das Silikonelastomer der Bedämpfungsschicht (4) einen Anteil von mindestens 55 % Al₂O₃ und von 2 % FE₂O₃ aufweist.

4. Ultraschallwandler nach Anspruch 1, **dadurch gekennzeichnet**, daß die Bedämpfungsschicht (4) während der Gelierphase der Anpaßschicht (3) aufbringbar ist.

5. Ultraschallwandler nach Anspruch 2, **dadurch gekennzeichnet**, daß sowohl die Anpaßschicht (3) als auch die Bedämpfungsschicht (4) chemisch in Struktur und Verbindung Affinität aufweist.

6. Ultraschallwandler nach Anspruch 2, **dadurch gekennzeichnet**, daß zur Bestimmung des Absorbtionskoeffizienten der Bedämpfungsschicht (4) definiert Luftblasen einbringbar sind.

7. Ultraschallwandler nach Anspruch 1, **dadurch gekennzeichnet**, daß die Bedämpfungsschicht (4) maschinell mischbar und aufbringbar ist.

## Claims

1. An ultrasonic transducer (1) with a housing (5), a cylindrical ceramic crystal (2) of small thickness, metal electrodes (7, 8) disposed on the end surfaces of the ceramic crystal, and a matching layer (3) of plastic disposed at the end surface of the ceramic crystal facing the radiating medium, said matching layer (3) being in positive and nonpositive contact with the diaphragm (6) of the ultrasonic transducer, which is formed by the bottom of the housing, the remainder of the interior space of the ultrasonic transducer being filled with a damping layer (4) of plastic, **characterized in** that the damping layer (4) is made of a silicone elastomer with a high content of metal oxides.

2. An ultrasonic transducer as claimed in claim 1, **characterized in** that the damping layer (4) has a density > 2.00 g/cm³.

3. An ultrasonic transducer as claimed in claim 1, **characterized in** that the silicone elastomer of the damping layer (4) contains at least 55% Al₂O₃ and 2% Fe₂O₃.

4. An ultrasonic transducer as claimed in claim 1, **characterized in** that the damping layer (4) can be applied during the gelation phase of the matching layer (3).

5. An ultrasonic transducer as claimed in claim 2, **characterized in** that the matching layer (3) and the damping layer (4) have such a chemical structure and composition as to exhibit affinity for one another.

6. An ultrasonic transducer as claimed in claim 2, **characterized in** that in order to determine the absorption coefficient of the damping layer (4), air bubbles are introducible in a defined manner.

7. An ultrasonic transducer as claimed in claim 1, **characterized in** that the damping layer (4) can be mixed and applied by machine.

## Revendications

1. Emetteur d'ultrasons (1) comportant un carter (5), un transducteur céramique (2) de forme cylindrique et de faible épaisseur, des électrodes métalliques (7, 8) étant disposées sur les faces frontales de ce transducteur, une couche d'adaptation (3) en matière synthétique disposée sur la face frontale du transducteur céramique orientée vers le milieu devant recevoir le rayonnement, cette couche étant en liaison physique et fonctionnelle avec la membrane (6) du transducteur, constituée par le fond du carter, l'espace interne restant dudit transducteur étant rempli par une couche d'amortissement (4) en matière synthétique, caractérisé en ce que la couche d'amortissement (4) est constituée en un élastomère de silicone à proportion élevée d'oxydes métalliques.

2. Emetteur d'ultrasons selon la revendication 1, caractérisé en ce que la couche d'amortissement (4) présente une densité spécifique supérieure à 2,00 g/cm³.

3. Emetteur d'ultrasons selon la revendication 1, caractérisé en ce que l'élastomère de silicone de la couche d'amortissement (4) contient au moins 55 % d'Al₂O₃ et au moins 2 % de Fe₂O₃.

4. Emetteur d'ultrasons selon la revendication 1, caractérisé en ce que la couche d'amortissement (4) est applicable pendant la phase de gélification de la couche d'adaptation (3).

5. Emetteur d'ultrasons selon la revendication 2, caractérisé en ce que, tant la couche d'adaptation (3) que la couche d'amortissement (4), présentent une affinité chimique de structure et de liaison.

6. Emetteur d'ultrasons selon la revendication 2, caractérisé en ce que pour déterminer le coefficient d'absorption de la couche d'amortissement (4), il est possible d'inclure de manière définie, des bulles d'air.

7. Emetteur d'ultrasons selon la revendication 1, caractérisé en ce que la couche d'amortissement (4) est mécaniquement miscible et applicable.
